# EUROPEAN PATENT APPLICATION

(11) **EP 1 460 636 A1**
(43) Date of publication of application: **22.09.2004**
(21) Application number: 03290668.7
(22) Date of filing: 17.03.2003
(51) Int. Cl.: G11B 33/04, B65D 85/57

(54) **Flexible storage system and process for making the same**

(71) Applicant: Wallon Imprimeur S.A., 03270 Saint-Yorre Cedex (FR)
(72) Inventor: De La Motte Bouloumie, Xavier, 03200 Vichy (FR); Collard, Gérard, 03200 Le Vernet (FR)
(74) Representative: Thurgood, Alexander John

(57) **Abstract**

The present invention relates to a flexible storage system, comprising:
- a data carrier housing means (2);
- access means (4) giving access to the data carrier housing means;
- one or more information sheets (3A,3B,3C),
wherein the data carrier housing means, access means and one or more information sheets are all physically linked together.

## Description

The present invention relates to a flexible storage system adapted to storing a data carrier. There are many known storage systems for various data carriers, including cardboard sleeves, rigid jewel cases, paper envelopes, either with or without transparent windows. Data carriers can be supports that contain computer readable information such as diskettes, compact discs, digital versatile disks, miniature compact discs, magneto-optical disks, magnetic tape, and the like, all of which are well known and widely available. Such data carriers are often used to supply software programs or other computer programs, for example, drivers, operating systems, but also presentations, multimedia, such as digitally converted or produced video and music, and the like.

One of the problems with the current storage systems for such data carriers including software and other computer or microprocessor executable programs, in particular for compact discs and digital versatile discs, is that most of them require some form of help or user guide to aid the user in installing and using the software or program. The help or aid provided can also be in machine readable form on the data carrier, for example contained in one or more files, such as in a word processing, document display format, plain text, rich text, or even in a structured mark-up language such as SGML, HTML or XML, the meanings of which are well known to the skilled person. However, including the help or aid on the data carrier in this way presupposes that the user knows how to access such data on the carrier and that the machine on which it is intended to be read is capable of either reading the data carrier or already has the necessary programs or software to read the format of the help on the data carrier.

In view of the above, it is still very common to provide the help, aid or user guides in paper format, often in the form of a booklet, that is supplied in addition to the data support, generally as a separate item. Such a presentation requires a particular type of packaging, and this usually occurs as a shrink-wrapped package, in which the data carrier and the user guide or booklet are wrapped in a thermoretractable film, which shrinks up upon cooling completely surrounding the user guide and the data carrier. In this case, the data carrier, for example, a compact or digital versatile disc, is often stored in a paper or cardboard sleeve comprising a translucent or transparent window that enables the user to see a printed surface of the data carrier that generally bears information relating to the producer of the software or program, the content of the data carrier, the name of the manufacturer, supplier or editor. The sleeve also often comprises a fold over element that constitutes a closure for the sleeve to prevent the data carrier from accidentally falling out of the sleeve.

The major problem with the above storage system is that the help, user guide, aid or documentation has to be supplied separately, and then packaged with thermoretractable film. This increases the cost of producing and distributing the media, but also complicates the packaging process, since a separate shrink wrap process is required.

The present applicant has devised a solution to the problem of providing an economically and technically acceptable solution to the problem of providing documentation or written or printed information with a data carrier all within a single flexible storage system.

Accordingly, one object of the present invention is a flexible storage system comprising :
- a data carrier housing means;
- access means giving access to the data carrier housing means ;
- one or more information sheets,
wherein the data carrier means, access means and one or more information sheets are all physically linked together.

By the term "physically linked together" it is to be understood that the various means described above are physically or mechanically attached in a way that they form a single functional unit, as opposed to known art solutions comprising disparate separate items that are simply bundled together in, say, a jewel case, or a shrink-wrapped plastic wrapping.

In view of the minimal cost of the data carrier, the present invention has been found useful in providing a solution that enables the written or printed documentation to be supplied with the data carrier without having to undergo a separate and supplementary packaging process such as shrink-wrap packaging, and what is more, to provide all of this combined functionality at significantly reduced cost.

In a preferred embodiment of the present invention, the data carrier housing means, access means, and one or more information sheets are so linked together to form a booklet, and more preferably they are linked together along a common axis forming a spine. For example, the access means, information sheets and housing means can be of approximately the same dimensions, and can all be linked all along one edge to form a common axis, and thereby a spine. Such linking can occur through commonly used techniques generally known to the skilled person, such as gluing, stitching, presssing, stapling, pinning and the like, so that a physical or mechanical link between the various components is obtained. Although the information sheets are linked to the access means and the data carrier housing means along a common axis, for example one of the edges of the booklet, they can in a preferred embodiment be fully or partially detachable. In this way, their use by the end user is facilitated.

The information sheets are generally sheets of relatively thin cardboard or paper, and preferably paper, so that the storage system is flexible, and capable of being inserted into, say a magazine or a newspaper. Various information can be printed on the information sheets. In the most preferred embodiment, where the data carrier is a compact disc or digital versatile disc, and the data on the disc is software, the information sheets comprise a user or installation guide. However, other information may be present on the information sheets, such as advertising, promotional texts for other products, and the like.

The information sheets are preferably fully or partially detachable. In order to obtain such a result, the information sheets can either be lightly glued or affixed with say a mobile glue, so that detachment is facilitated, or can also be at least partially perforated. The perforations can be substantially parallel to the common axis, but separate therefrom, so that when the sheet is removed, a stub is left within the flexible storage system.

In another preferred embodiment, the system further comprises one or more further sheets bearing registration and warranty details, located between the access means and the data carrier housing means. Such further sheets can most preferably be fully or partially detachable as with the information sheets. The one or more further sheets can also preferably contain areas on which adhesive has been placed, such that when the sheet is detached, it can be folded into an envelope, such as a business reply envelope. In this way, for example, when the data carrier is a compact disc or a digital versatile disc containing software, the end user can fill in the registration and warranty data on the further sheets and then detach them from the booklet and return them to the manufacturer or distributor of the software. As with the information sheets, the further sheets can be made detachable by gluing with a mobile or reusable glue or gel, or else can contain perforations along at least part of the surface of the sheet, substantially parallel to the common axis defined previously.

The data carrier, as has been mentioned previously, can be a compact disc or digital versatile disc. However, other forms of data carrier can also be envisaged for use in the present invention, and therefore can include for example magneto-optical discs, floppy discs, miniaturized data carriers, magnetic strips, credit cards, microprocessor bearing objects such as smart cards, or chip-on-a-card products, and any other form of rewriteable or non rewriteable memory supports, in flexible or semi-rigid format and the like.

The data carrier housing means preferably comprises an envelope. In a most preferred embodiment, the data carrier housing forms the last of the leaves of the booklet.The data carrier housing means can also comprise an envelope with a window, whereby the window can be a translucent or transparent window. The transparent or translucent window can also be replaced by an opaque sheet bearing an opening, for example, a circular opening, that enables the printed information on the external surface of the data carrier to be read by the user through the opening. More preferably, the translucent or transparent window comprises a flexible polymeric membrane, such as a film of polyethylene, polypropylene or polystyrene. Another possibility is a transparent or translucent sheet of paper, such as crystal paper or Pergama® . In another preferred embodiment, the translucent or transparent window comprises a substantially rigid membrane, such as for example those made from polymethacrylate. In this way, the system according to the invention has a window that enables the user to see what kind of data carrier is present, and any information that might be printed on the data carrier's external surface.

In still yet another preferred embodiment, the envelope comprises an opening permitting introduction and removal of the data carrier. This opening is preferably oriented along the common axis, such that when the system is opened, the data carrier housed within the envelope can not simply fall out. However, it is also possible for the opening to be located orthogonal to said common axis if that is so desired. The opening can comprise, for example, a portion of the window that does not form a seal with the rest of the envelope.

As mentioned previously, the flexible storage system comprises access means. The access means give access to the information sheets and the data carrier housing means. The access means is generally and preferably also made of flexible cardboard or paper, in the form of a sheet. When the access means is made of paper, the sheets can be made in varying thicknesses, for example by using plies of paper of a smaller thickness, to attain the required rigidity while maintaining flexibility. The access means preferably comprises a detachable closure flap. Even more preferably, the detachable closure flap is an integral part of the access means, for example by extension of the sheet. In this case, the expression "detachable" is to be understood as meaning that the closure flap is detachable from the data carrier housing means, so that the system may be opened. In essence, when the flap is an integral extension of the access means, it will be folded over the other information sheets and further sheets, and will wrap around the data carrier housing along an edge most preferably opposite to that of the common axis. The flap can be made detachable by gluing the flap with a mobile glue or gel at one or more points on the underside of the flap. In this way, the flexible storage system can be opened and closed.

In a preferred variant of the invention, the data carrier housing can comprise the detachable closure flap forming an integral part of the data carrier housing, instead of the access means. In this case, the flap still wraps around the information and further sheets, but also over the top surface of the access means, which in this case are comprised by a simple cover sheet. The flap may be affixed in a similar manner to that previously described.

In still yet another preferred embodiment, the flexible storage system also comprises a proof of seal. The proof of seal is a means to demonstrate visibly to the user that the product has previously not been opened by another person. Often, such proofs of seal are associated with acceptance of the terms and conditions of use of the data carrier or any software stored thereon. The proof of seal preferably forms part of the closure flap, and can comprise a detachable strip removably attached to the closure flap. The detachable strip can be obtained for example by perforating two substantially parallel lines along the closure flap, such that when the closure flap is opened, the force imparted to the flap causes the strip to be torn off and separate from the flexible storage system. In this way, there is direct visible evidence whether or not the system has been opened previously.

Finally, in a preferred variant of the present invention, the flexible storage system as described previously has access means that further comprises a punched strip. Such a punched strip can be useful for inserting the flexible storage system of the invention into a ring binder folder or the like, thereby facilitating ordering of the storage system, or storage of the storage system in a more comprehensive storage system, such as an archive. Preferably, the punched strip is arranged substantially parallel to the common axis, but this could of course b e arranged orthogonally to the common axis. Even more preferably, the punched strip is made up of one or more plies of paper, plastic or both. In this case, it is possible to use for example a ply of plastic film bonded to several other plies of paper, for example three other plies of paper, with the plastic film representing the uppermost ply. Of course, the skilled person will appreciate that other combinations of such an arrangement can be foreseen, for example, having the plastic film ply as the lowest ply, with the paper plies laid on top, or any mix thereof. Ideally, the punched strip projects beyond the spine, such that insertion into a ring binder say, is facilitated, and avoids having to punch the access means or cover sheet. In a most preferred embodiment, the punched strip contains two or more substantially aligned punched holes, but can contain say from two to six holes, or even more, where there is sufficient space on the strip, and the intended functionality of said strip, that is, to facilitate insertion into a ring binder system, is not impaired.

### BRIEF DESCRIPTION OF THE FIGURES

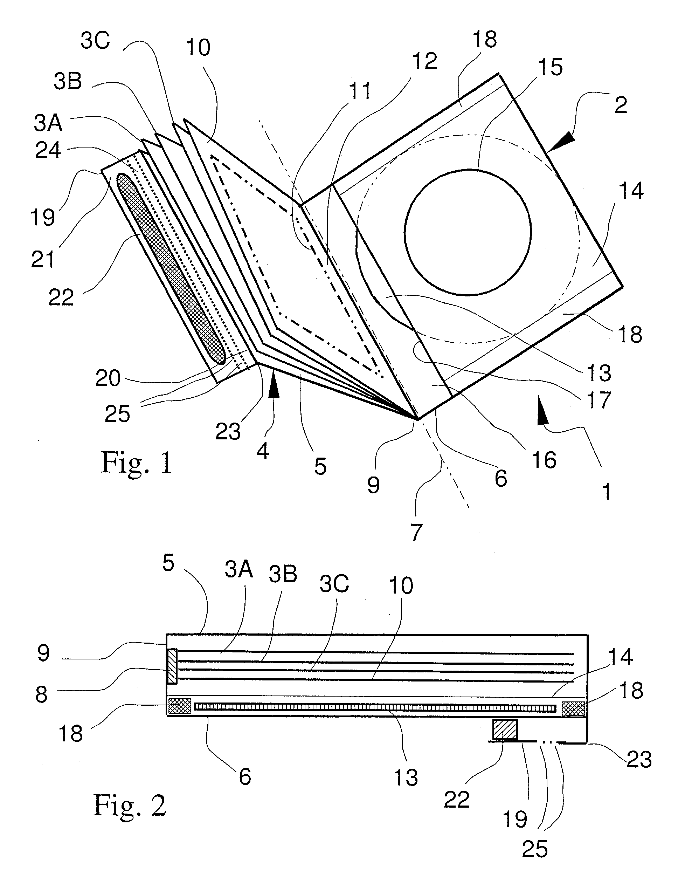

Figure 1 shows a perspective view of a preferred flexible storage system according to the present invention;
Figure 2 shows a sectional view of the preferred flexible storage system of Figure 1;
Figure 3 shows a top plan view of a variant of the flexible storage system depicted in Figure 1, including a punched strip;
Figure 4 shows a sectional view of Figure 3, including the punched strip.

### DETAILED DESCRIPTION OF THE INVENTION

The invention will be more clearly illustrated by the following examples, in association with the accompanying figures, given as purely representative and non-limiting of particularly preferred embodiments of the present invention.

### Example 1

The preferred flexible storage system of the present invention is described in more detail as follows. A flexible storage system, represented generally by the reference 1, comprises a data carrier housing means 2, one or more information sheets 3A, 3B, 3C, and access means 4. The access means 4 comprise at least one sheet forming a cover sheet 5, and the data carrier housing means 2 also comprise at least one sheet 6. The sheets may b e made of paper or cardboard, for example paper that is glued or folded into several plies. The various components 2, 3, 4 are physically linked together, along a common axis 7 defined b y the alignment of one edge of the sheets making up the flexible storage system 1. As a whole, the flexible storage system 1 ressembles a booklet. The sheet 5 or sheets making up the access means 4 and the sheet 6 or sheets making up the data carrier housing means 2 may be one single sheet folded along the common axis 7, thereby constituting the front and back covers of the booklet. The various sheets are physically linked together by glue 8, or b y pressing, to form a spine 9. In this embodiment, the booklet has a closed format measuring about 148 mm by 148 mm, and contains for example anything from 4 to 12 pages, and more preferably 8, 10 or 12 pages. This is not the only format possible and one can envisage a variety or formats, whereby not all of the sheets or data carrier housing means 2 have the same size. Exemplary formats are for example, 198 mm by 148 mm for the access means 4, data carrier housing means 2 and information 3 and further sheets 10.

The flexible storage system also comprises further sheets 10 bearing warranty or registration information located between the access means 4 and the data carrier housing means 2.

The information sheets 3, and further sheets 10, can be detachable from the flexible storage system 1 via perforations 11 made substantially parallel to the common axis 7 or spine 9, such that when the sheets are detached, a stub 12 is left. Alternatively, the sheets can be affixed by a mobile or reusable glue 8 that just requires a simple traction by the user to separate the sheets from the booklet. The information sheets 3 and further sheets 10 comprise respectively, information relating to the use and installation of software stored on a data carrier 13, and warranty and registration information for the software.

The data carrier housing means 2 can be comprised of one or more plies of paper of cardboard, and preferably two plies of paper that are glued together by an adhesive to form a composite structure that is more rigid than a single ply. As mentioned previously, the data carrier housing means 2 comprise an envelope 14. The envelope 14 is formed by the sheet 6 making up the back cover, and a transparent window 15. The window 15 is affixed to the sheet 6, for example by strips of glue 18, on the face 16 that is within the booklet, in such a way that an opening 17 is formed along an edge parallel to the common axis 7. The opening 17 is large enough to enable a data carrier 13, such as a compact disc or digital versatile disc to be inserted and removed. As the opening 17 is close to the common axis 7 or spine 9, the disc once inserted can not fall out, and will be maintained within the storage system 1 until removed by the user. Alternatively, the opening 17 could be provided substantially orthogonally to the common axis 7.

The access means 4 in the form of the front cover, comprises an extension that is integral with the sheet 5 making up the cover, and that forms a closure flap 19 that projects out over the edge 20 opposite the spine 9. The projection of the flap 19 is sufficient for the flap 19 to be able to be wrapped around the information 3 and further sheets 10, but also the data carrier housing means 2, such that the inner face 21 of the closure flap 19 can be glued with adhesive 22 to the outer face of the sheet 6 forming the data carrier housing means 2. In this way, complete closure of the flexible storage system 1 is attained. In this embodiment, the flap 19 is about 40 mm wide, measured from the fold 23 that corresponds to the edge 20 opposite to the spine 9. The flap 19 has a perforated strip 24 about 9 mm in from the fold 23, running substantially parallel to the common axis 7, that constitutes a proof of seal of the flexible storage system 1 and is about 14 mm wide. Since the closure flap 19 is affixed to the outer face of the sheet 6 forming the data carrier housing means 2 by adhesive 22, in order to open the system, one pulls the proof of seal strip 24 along the perforations 25 and removes the strip 24 in order to be able to lift the remainder of the flap 19 that still projects from sheet 5.

In a variant on the embodiment shown above, the flap is a projection or extension of the sheet of the data carrier housing and folds over and is attached to the front cover sheet of the access means.

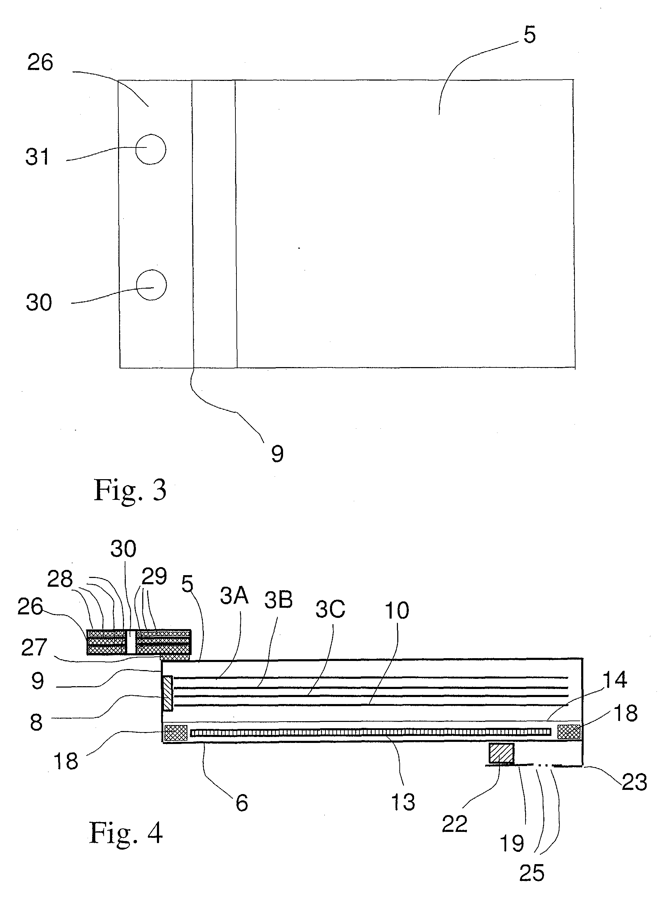

In yet another preferred variant represented in Figures 3 and 4, the flexible storage system 1 has access means that also comprise a punched strip 26. The punched strip is affixed substantially parallel to the common axis 7 by adhesive 27. The punched strip is made up of four plies of paper 28, that are adhered together by layers of adhesive 29. The whole structure is perforated with at least two holes 30, 31, and projects beyond the spine 9, in a direction substantially opposite to that of the flap 19 of the storage means 1. In this way, the punched strip can be used to insert the flexible storage system into another storage system, for example, a ring binder or folder, whereby the holes 30, 31 serve to guide and retain the flexible storage system 1 of the invention in the ring binder storage system.

## Claims

1. A flexible storage system (1) comprising :
- a data carrier housing means (2) ;
- access means (4) giving access to the data carrier housing means (2) ;
- one or more information sheets (3A, 3B, 3C),
wherein the data carrier housing means (2), access means (4) and one or more information sheets (3A, 3B, 3C) are all physically linked together.

2. A flexible storage system (1) according to claim 1, wherein the data carrier housing means (2), access means (4), and one or more information sheets (3A, 3B, 3C) are so linked together to form a booklet.

3. A flexible storage system (1) according to claim 1, wherein the data carrier means (2), access means (4) and one or more information sheets (3A, 3B, 3C) are linked together along a common axis 7 forming a spine 9.

4. A flexible storage system (1) according to claim 1, wherein the system (1) further comprises one or more further sheets (10) bearing registration and warranty details, located between the access means (4) and the data carrier housing means (2).

5. A flexible storage (1) system according to claim 4, wherein the one or more further sheets (10) bearing registration and warranty details are fully or partially detachable.

6. A flexible storage system (1) according to claim 1, wherein the at least one or more information sheets (3A, 3B, 3C) are fully or partially detachable.

7. A flexible storage system (1) according to claim 5, wherein each of the one or more further sheets (10) bearing registration and warranty details is perforated along at least part of its surface substantially parallel to a common axis (7).

8. A flexible storage system (1) according to claim 1, wherein each of the one or more information sheets (3A, 3B, 3C) is perforated at least partially.

9. A flexible storage system (1) according to claim 4, wherein the one or more further sheets (10) are perforated at least partially.

10. A flexible storage system (1) according to claim 1, wherein the data carrier housing means (2) comprises two or more plies of paper glued or assembled together by adhesive.

11. A flexible storage system (1) according to claim 1, wherein the data carrier housing means (2) comprises an envelope (14).

12. A flexible storage system (1) according to claim 1, wherein the data carrier housing means comprises an envelope (14) with a window (15).

13. A flexible storage system (1) according to claim 12, wherein the envelope (14) comprises a translucent or transparent window (15).

14. A flexible storage system (1) according to claim 13, wherein the translucent or transparent window (15) comprises a flexible polymeric membrane.

15. A flexible storage system (1) according to claim 13, wherein the translucent or transparent window (15) comprises a substantially rigid membrane.

16. A flexible storage system (1) according to claim 11, wherein the envelope (14) comprises an opening (17) permitting introduction and removal of the data carrier (18).

17. A flexible storage system (1) according to claim 1, wherein the access means (4) giving access to the data carrier housing means (2) comprises a detachable closure flap (19).

18. A flexible storage system (1) according to claim 17, wherein the detachable closure flap (19) is an integral part of the access means (4).

19. A flexible storage system (1) according to claim 1, wherein the data carrier housing means (2) also comprises a detachable closure flap (19) forming an integral part of the data carrier housing means (2).

20. A flexible storage system (1) according to claim 1, wherein the system (1) also comprises a proof of seal.

21. A flexible storage system (1) according to claim 19 or claim 20, wherein the proof of seal forms part of the closure flap (19).

22. A flexible storage system (1) according to claim 20, wherein the proof of seal comprises a detachable strip (24) removably attached to the closure flap (19).

23. A flexible storage system (1) according to claim 1, wherein the access means (4) further comprises a punched strip (26).

24. A flexible storage system (1) according to claim 23, wherein the punched strip (26) is arranged substantially parallel to the common axis (7).

25. A flexible storage system (1) according to claim 23 or claim 24, wherein the punched strip (26) is made up of one or more plies of paper, plastic or both (28).

26. A flexible storage system (1) according to any one of claims 23 to 25, wherein the punched strip (26) projects beyond the spine (9).

27. A flexible storage system (1) according to any one of claims 23 to 26, wherein the punched strip (26) contains two or more substantially aligned punched holes (30, 31).
